# EUROPEAN PATENT SPECIFICATION

(11) **EP 3 424 685 B1**
(45) Date of publication and mention of the grant of the patent: **09.10.2019**
(21) Application number: 18152999.1
(22) Date of filing: 23.01.2018
(51) Int. Cl.: B29C 64/118, B29C 64/112, B33Y 10/00

(54) **THREE-DIMENSIONAL PRINTING METHOD**
VERFAHREN ZUM DREIDIMENSIONALEN DRUCKEN
PROCÉDÉ D'IMPRESSION TRIDIMENSIONNELLE

(30) Priority: 04.07.2017 TW 106122438
(43) Date of publication of application: 09.01.2019
(73) Proprietor: XYZprinting, Inc., New Taipei City 22201 (TW); Kinpo Electronics, Inc., New Taipei City 22201 (TW)
(72) Inventor: Lee, Yang-Teh, New Taipei City 22201 (TW); Juang, Jia-Yi, New Taipei City 22201 (TW); Ho, Ming-En, New Taipei City 22201 (TW); Huang, Chun-Hsiang, New Taipei City 22201 (TW)
(74) Representative: 2K Patentanwälte Blasberg Kewitz & Reichel

(56) References cited:
- TW-A- 201 722 689
- US-A1- 2011 222 081
- US-B2- 7 924 458

## Description

### BACKGROUND

### Technical Field

The disclosure relates to a three-dimensional printing method.

### Description of Related Art

Three-dimensional printing is also referred to as addition manufacturing or additive manufacturing (AM), of which the working principle lies in a computer controlling a stacking material layer by layer to construct (print) three-dimensional objects with various shapes and geometric features. Nowadays, various three-dimensional printing techniques have been developed. Among them, taking a fused deposition modeling (FDM) technique as an example, a printing material after being heated, melted and molded is extruded into wires through a print head to form printing layers, and then the printing layer is stacked layer by layer on a forming platform, thereby forming a three-dimensional object as desired after the printing material is cooled and solidified.

Moreover, in the present technique, an ink-jet module is additionally disposed to color the printing layers or the three-dimensional object. However, due to difference between the printing material and the inkjet ink, the ink is subject to slipping away from the printing material. In the meantime, when printing and coloring operations of the three-dimensional object are performed layer by layer, due to material characteristics of the ink, an issue of insufficient bonding strength among different formed layers may occur in the presence of the ink.

TW201722689 discloses an Fused Deposition Modelling process in which layers of a material are formed in sequence according to slice information of a 3D model, and providing a plurality of color-ink layers on each of the material layers, such that the material layers and the color-ink layers are stacked alternately to form a colored 3D object.

### SUMMARY

The disclosure provides a three-dimensional printing method capable of increasing structure strength of a three-dimensional object after being printed and formed and protecting colors on the three-dimensional object.

A three-dimensional printing method of the disclosure is adapted for a three-dimensional printing device to print a three-dimensional object. The three-dimensional printing method includes the following steps. Structure information and coloring information of the three-dimensional object is provided. A slicing process is performed on the structure information of the three-dimensional object by a processor to obtain information of a plurality of printing layers. The coloring information of the three-dimensional object is controlled to correspond to the information of a plurality of printing layers by the processor to obtain information of a color layer corresponding to each of the printing layers. An adhesive layer is disposed on each of the printing layers and its corresponding color layer, such that the adhesive layer covers at least a part of the color layer.

A three-dimensional printing method of the disclosure is adapted for a three-dimensional printing device to print a three-dimensional object. The three-dimensional printing method includes the following steps. Structure information and coloring information of the three-dimensional object are provided. A slicing process is performed on the structure information of the three-dimensional object by a processor to obtain information of a plurality of printing layers. The coloring information of the three-dimensional object is controlled to correspond to the information of a plurality of printing layers by the processor to determine whether a predetermined color-layer region exists on each of the printing layers. When the predetermined color-layer region exists on the printing layer, an adhesive layer is disposed in the predetermined color-layer region. A color layer is disposed in the predetermined color-layer region, such that the color layer is attached to the printing layer with the adhesive layer.

Based on the above, when the three-dimensional printing device prints each of the printing layers, the adhesive layer is disposed on each of the printing layers, and each of the color layers is protected with the adhesive layer. As the color layer is protected and isolated from contacting the next printing layer by the adhesive layer, temperature reduction and property change can be prevented from occurring to the next printing layer, and the next printing layer is stacked on and attached to the former printing layer having the color layer with the adhesive layer, thereby achieving the purpose of increasing the structure strength. In addition, the adhesive layer covering the color layer has a protection effect, thereby avoiding issues, such as color fading and ink slipping away due to affection by ambient vapor and light irradiation.

In order to make the aforementioned and other features and advantages of the invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram illustrating a part of a three-dimensional printing device according to an embodiment of the disclosure.
FIG. 2 is a schematic illustrating a part of a printing assembly depicted in FIG. 1.
FIG. 3 is a flowchart illustrating a three-dimensional printing method according to an embodiment of the disclosure.
FIG. 4 is a schematic diagram of the forming process depicted in FIG. 3.
FIG. 5A and FIG. 5B are schematic diagrams respectively illustrating the forming process depicted in FIG. 3 according to different embodiments.
FIG. 6 is a schematic diagram illustrating the stacking of a part of the printing layers according to an embodiment of the disclosure.
FIG. 7 is a schematic side-view diagram illustrating the stacking of the printing layers according to another embodiment.
FIG. 8 is a flowchart illustrating a three-dimensional printing method according to another embodiment of the disclosure.
FIG. 9 is a schematic diagram of the forming process depicted in FIG. 8.
FIG. 10 is a schematic cross-sectional diagram illustrating a part of the printing layers according to another embodiment.
FIG. 11 is a schematic cross-sectional diagram illustrating a part of the printing layers according to another embodiment.

### DESCRIPTION OF EMBODIMENTS

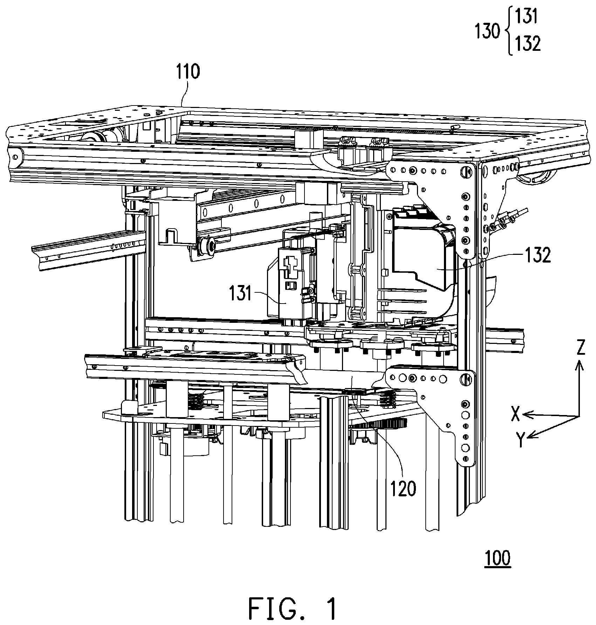

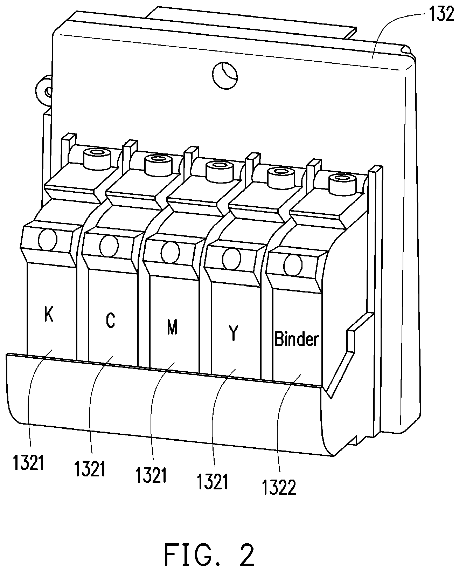

FIG. 1 is a schematic diagram illustrating a part of a three-dimensional printing device according to an embodiment of the disclosure. FIG. 2 is a schematic illustrating a part of a printing assembly depicted in FIG. 1. Referring to FIG. 1 to FIG. 2 simultaneously, in the present embodiment, a three-dimensional printing device 100 includes a chassis 110, a platform 120 and a printing assembly 130. Herein, a three-dimensional printing device 100 is, for example, a fused deposition modeling (FDM) device and configured to print printing layers one by one on the platform 120 with a print head 131 of the printing assembly 130 to form a three-dimensional object by stacking the printing layers one by one. In addition, the printing assembly 130 also includes a coloring head 132, such as an ink-jet head, configured to color surfaces of the printing layers or a surface of the three-dimensional object. In the present embodiment, the coloring head 132 includes a plurality of ink cartridges 1321 and a binder cartridge 1322. The ink cartridges 1321 include, for example, four primary colors (cyan, magenta, yellow and black) for printing, and the binder cartridge 1322 is used to provide a binder material for binding relative elements in favor of reinforcing structural strength during a printing process of the three-dimensional object.

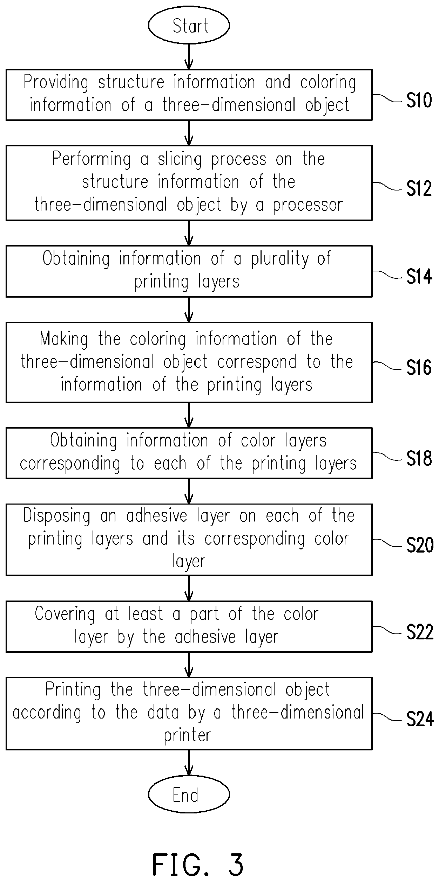

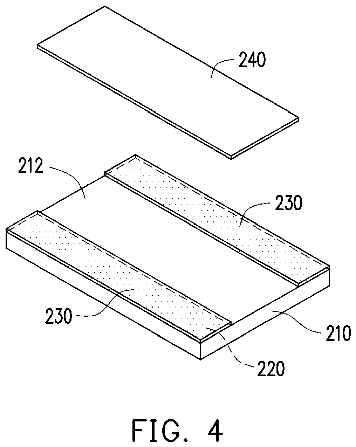

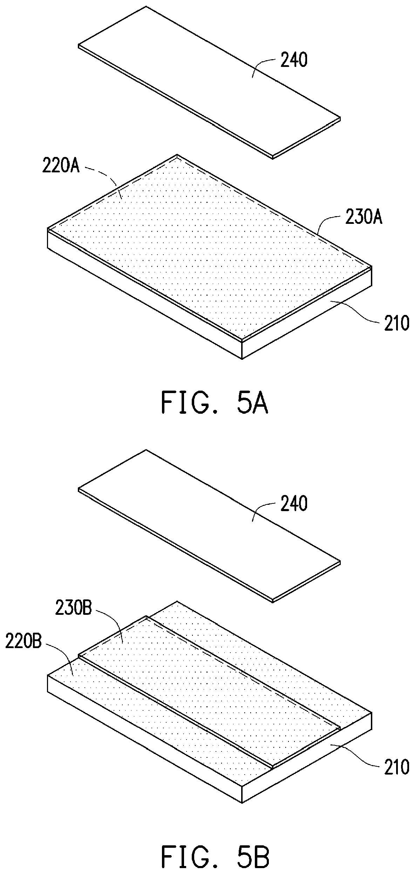

FIG. 3 is a flowchart illustrating a three-dimensional printing method according to an embodiment of the disclosure. FIG. 4 is a schematic diagram of the forming process depicted in FIG. 3. FIG. 5A and FIG. 5B are schematic diagrams respectively illustrating the forming process depicted in FIG. 3 according to different embodiments. Herein, FIG. 4, FIG. 5A and FIG. 5B only illustrate a part of the printing layers for example.

Referring to FIG. 3 first, in the present embodiment, structure information and coloring information of the three-dimensional object are first provided (step S10). For example, the structure information and the coloring information of the three-dimensional object as required are imported to the three-dimensional printing device 100 in a digital data form, and a slicing process is performed on the structure information of the three-dimensional object (step S12) by the processor to obtain information of a plurality of printing layers (step S14). Namely, design data of a 3D model created by software is converted into a plurality of thin (quasi-two-dimensional) cross-sectional layers which are continuously stacked.

Then, the coloring information of the three-dimensional object and the information of the printing layers are controlled to correspond to each other by the processor (step S16), so as to obtain information of a color layer corresponding to each of the printing layers (step S18), while an ink volume required by each printing layer and a position and an area planed for the color layer on each of the printing layers may also be obtained. In an embodiment, for example, the coloring information of the three-dimensional object is imported to the three-dimensional printing device 100 by the processor in the same manner like that for the slicing process in step S12, and the coloring information corresponds to each of the printing layers in step S14, so as to obtain the information of the color layer corresponding to each of the printing layers.

Then, an adhesive layer is disposed on each of the printing layers and its corresponding color layer (step S20), such that the adhesive layer covers at least a part of the color layer (step S22).

After step S22 is completed, it represents that an analysis operation with respect to the structure information and the coloring information of the three-dimensional object is completed. As such, a printing operation is started, namely, the three-dimensional printing device 100 is driven to print the three-dimensional object according to data sent by the processor (step S24).

Herein, the operation of the adhesive layer covering the color layer in step S22 includes the following scenarios.

First, referring to FIG. 4, in the present embodiment, the three-dimensional object, on which the slicing process is performed in step S12, obtains the information of the plurality of printing layers 210 in step S14. In this case, FIG. 4 illustrates only printing layers 210 and 240 for example, where the printing layer 240 is stacked on the printing layer 210. In the present embodiment, it may be learned through the operation in step S16 that a color layer 220 is disposed on the printing layer 210, while a color layer is prevented from being disposed in a connection region 212 in the consideration that an overlapping effect may be caused by the printing layer 240 thereon. Alternatively, in another embodiment, a color layer may be first disposed in an overall area of the printing layer 210, and once it is known that the printing layer 240 is stacked on the connection region 212 of the printing layer 210, the information of the color layer in the connection region 212 is deleted. No matter what means described above is adopted, the scenario that the color layer is prevented from being disposed in the connection region 212 may be achieved. Thus, correspondingly, in step S20, an adhesive layer 230 is disposed in only the region where the color layer 220 is present. As illustrated in FIG. 4, the adhesive layer 230 is disposed on the color layer 220 through the operation in step S20, the adhesive layer 230 is made of, for example, a transparent material, and in this way, beside allowing the color layer 220 to appear without any shielding, the adhesive layer 230 may also provide the color layer 220 with a protection effect, so as to improve aesthetics and exhibition of the color layer 220.

Second, referring to FIG. 5A, the present embodiment is similar to the embodiment illustrated in FIG. 4, and the difference therebetween lies in that in the present embodiment, a color layer 220A is distributed on the entire surface of the printing layer 210 through the operation in step S16, and an adhesive layer 230A covers a connection range between the color layer 220A and the next printing layer 240 through the operation in step S20. In other words, the determination of the stacking relation between the printing layers 210 and 240 does not have to be performed in the embodiment illustrated in FIG. 5A, but instead, the adhesive layer 230A is provided on the printing layer 210 wherever the color layer 220A is present. In this way, when the printing layer 240 is stacked on the printing layer 210, with the presence of the adhesive layer 230A, not only an issue that the printing layer 240 and the color layer 220A have difficulty in bonding due to being made of different materials, but also an issue that the printing layer 240 directly contacting the color layer 220A slips away easily may be prevented. Also, the color layer 220a may be fixedly held between the printing layer 210 and the adhesive layer 230A with the adhesive layer 230A. As for the printing layer 210, even the region which is not stacked on the printing layer 240 may also provide the color layer 220A with protection and aesthetics effects with the presence of the adhesive layer 230A.

Third, referring to FIG. 5B, the present embodiment is similar to the embodiment illustrated in FIG. 4, and the difference therebetween lies in that in the present embodiment, a color layer 220B is distributed on the entire surface of the printing layer 210 through the operation in step S16, an adhesive layer 230B covers a partial range of a color layer 220B through the operation in step S20, and the partial range refers to a region that the printing layer 240 is stacked on the printing layer 210 (which is equivalent to the connection region 212 of the embodiment illustrated in FIG. 4). In this case, the determination of the relation between the printing layers 210 and 240 required in the embodiment illustrated in FIG. 4 is also performed. However, after the determination, the adhesive layer 230B is disposed only in the region where the printing layers 210 and 240 are stacked, such that the printing layers 210 and 240 are attached to each other with the adhesive layer 230B. The printing layer 240 may be prevented from contacting the color layer 220B with the presence of the adhesive layer 230B.

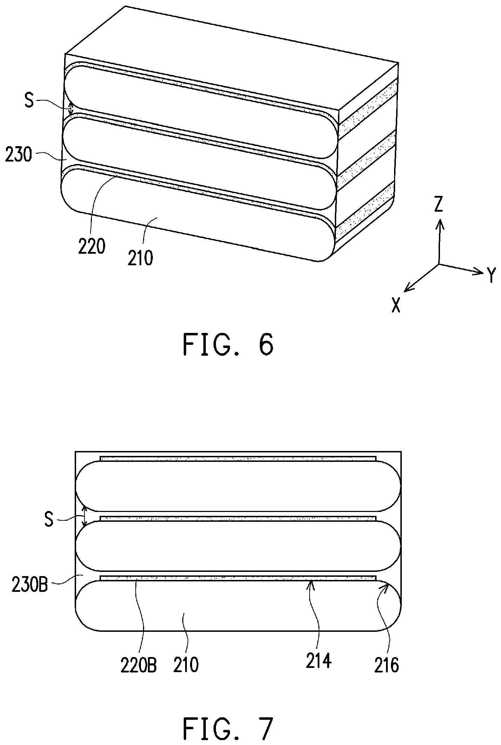

FIG. 6 is a schematic diagram illustrating the stacking of a part of the printing layers according to an embodiment of the disclosure. Referring to FIG. 6 in comparison with FIG. 3, in the present embodiment, as steps S10 to S24 are performed, each of the printing layers of the three-dimensional object is analyzed, and thereby, the disposition of color layers and adhesive layers may be determined. In this case, a scenario where a plurality of printing layers 210, a plurality of color layers 220 and a plurality of adhesive layers 230 are stacked one by one is taken as an example. The color layers 220 are respectively distributed on the entire surfaces of the printing layers 210, and the adhesive layers 230 respectively overlap the color layers 220. Namely, an orthographic projection area of each of the adhesive layers 230 on each of the printing layers 210 is equal to an orthographic projection area of each of the color layers 220 on each of the printing layers 210. In this way, each of the adhesive layers 230 covers each of the color layers 220, so as to achieve a protection effect. It should also be noted that a gap S exists between each two adjacent printing layers 210, and if only the printing layers and the color layers are provided as in the scenario described above, in addition to the issue of insufficient bonding strength or the issue that the color layer gets departing away easily, a part of the color layer 220 extending to the gap S has uneven distribution, which may even cause affection to other printing layers. Accordingly, in the present embodiment, the adhesive layer 230 further disposed on the color layer 220 may effectively achieve the effect of filling the gap with the property of the adhesive layer 230 and thus, provide an effect of fixing (also referred to as color setting) of the color layer 220 in the gap S. In this circumstance, a fluidity of the adhesive layer 230 is greater than a fluidity of the color layer 220, a surface tension of the adhesive layer 230 is less than a surface tension of the color layer 220, and an adhesion force of the color layer 220 with respect to the printing layer 210 is less than an adhesion force of the adhesive layer 230 with respect to the printing layer 210. Thus, the present embodiment employs the adhesive layer 230 to not only fix the color layer 220 but also achieve the effect of filling the gap S.

FIG. 7 is a schematic side-view diagram illustrating the stacking of the printing layers according to another embodiment. Referring to FIG. 7, being different from the above, in the present embodiment, each color layer 220B is only distributed on a horizontal surface 214 of the printing layer 210, but not distributed on an arc surface 216 of the printing layer 210 (as described above, during the FDM molding process, as the printing layers are formed by extruding the printing material into wires, an edges of each printing layer still partially appear a contour of a wire-like printing material, which is the arc surface 216). However, each adhesive layer 230B not only completely covers a range of each color layer 220B, but also is distributed on the arc surface 216 of each printing layer 210. Namely, an orthographic projection area of the adhesive layer 230B on each printing layer 210 is greater than an orthographic projection area of the color layer 220B on each printing layer, such that the color layer 220B is entirely covered within the adhesive layer 230B.

It should be further mentioned that referring to FIG. 6 again, when another printing layer is disposed on the adhesive layer 230, adhesion of the adhesive layer 230 may be activated by a high temperature as the printing layer is still in a high-temperature melted state, and the printing layer provides an extruding effect toward the adhesive layer 230 through the extruding process of the print head, such that the adhesive layer 230 fills the gap S and is distributed on the horizontal surface and the arc surface between the printing layers. FIG. 7 also illustrates the features as shown in FIG. 6 and thus, will not be repeatedly described.

Based on the embodiments described above, when covering the color layer, the adhesive layer may be utilized to increase brightness of the color layer with optical actions such as scattering and/or reflection, thereby not only providing the three-dimensional object with translucency, but also isolating the color layer from directly contacting the next printing layer. When another printing layer is printed again to stack on the former printing layer or color layer, the presence of the adhesive layer may contribute to preventing reduction in the original adhesion force and property change caused by temperature reduction from occurring to said another printing layer. In addition, the next printing layer is stacked on and attached to the color layer or the printing layer with the adhesive layer, thereby achieving the purpose of increasing the structure strength. Furthermore, the adhesive layer covering the color layer may provide a protection effect, thereby avoiding issues, such as color fading and ink slipping away due to affection by ambient vapor and light irradiation or physical wear and tear. In addition, as the printing layers are hydrophobic, the ink of the color layer, when being distributed on each printing layer, does not easily flow on the printing layer. On the other hand, in the present embodiment, the fluidity of the adhesive layer is greater than the fluidity of the color layer (ink), and thus, the adhesive layer provides the aforementioned effect of filling the gap S of the printing layer, thereby fixing a part of the color layer extending to the gap S.

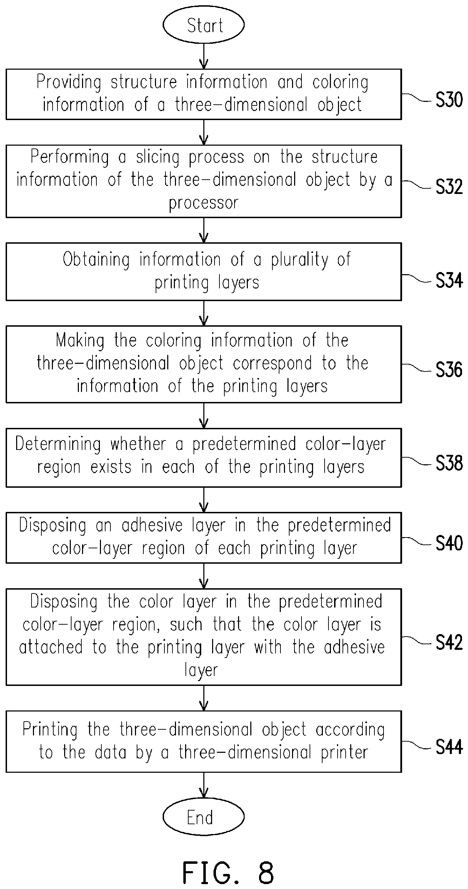

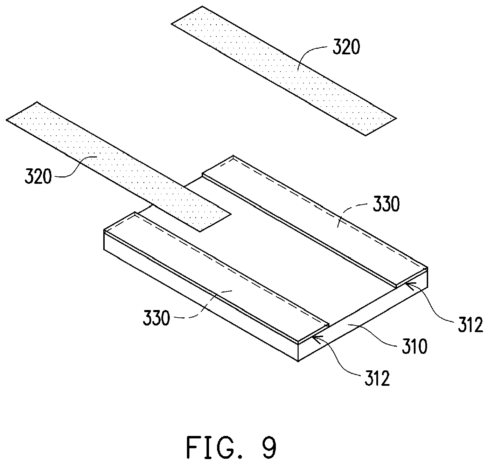

FIG. 8 is a flowchart illustrating a three-dimensional printing method according to another embodiment of the disclosure. FIG. 9 is a schematic diagram of the forming process depicted in FIG. 8.

Referring to FIG. 8, a three-dimensional printing method of the present embodiment is similar to that of the embodiment illustrated in FIG. 3, and steps S30 to S34 are the same as steps S10 to S14 described above and thus, will not be repeated.

The difference is that in step S36 of the present embodiment, the coloring information of the three-dimensional object and the information of a plurality of printing layers are controlled to correspond to each other by the processor, thereby, in step S38, whether a predetermined color-layer region exists on each of the printing layers is determined (step S38), and simultaneously, an area of the predetermined color-layer region on each printing layer may be calculated.

Then, in step S40, an adhesive layer is disposed in the predetermined color-layer region of each printing layer, and thereafter, in step S42, a color layer disposed on the predetermined color-layer region, such that the color layer is attached to the printing layer with the adhesive layer. In this way, the predetermined color-layer region may exist in a specific range or an overall range of the printing layer, and the adhesive layer is completely distributed on the predetermined color-layer region, where a distribution area of the color layer is not greater than a distribution area of the adhesive layer.

After step S42, a printing operation of the three-dimensional object is performed by the three-dimensional printing device 100 according to the data sent by the processor in step S44.

Referring to FIG. 9 in comparison with FIG. 8, after it is determined that a predetermined color-layer region 312 exists on a printing layer 310 in step S38, an adhesive layer 330 is disposed on a predetermined color-layer region 312, and a color layer 320 is then disposed on the adhesive layer 330. In other words, in the present embodiment, the printing layer 310 and the color layer 320 are certainly attached to each other with the adhesive layer 330.

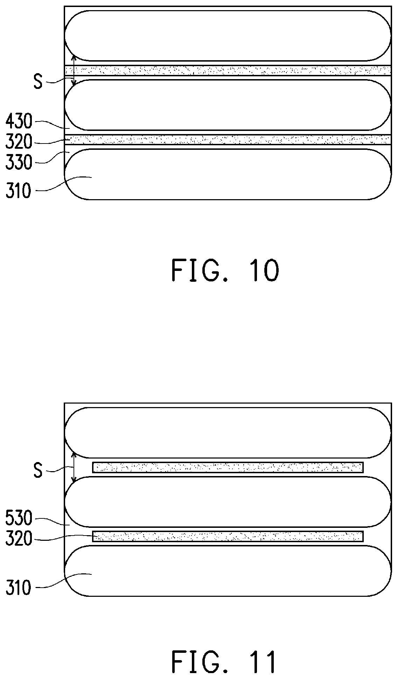

FIG. 10 is a schematic cross-sectional diagram illustrating a part of the printing layers according to another embodiment.

Referring to FIG. 10, the embodiment illustrated herein combines the embodiments illustrated in FIG. 9 and FIG. 6. As illustrated in FIG. 9, after the predetermined color-layer region on the printing layer 310 is known, the adhesive layer 330 is disposed on the predetermined color-layer region, and then, the color layer 320 is disposed in the predetermined color-layer region, such that the adhesive layer 330 is attached to the printing layer 310. Then, as illustrated in FIG. 6, another adhesive layer 430 is disposed on the color layer 320, such that the adhesive layer 430 covers the color layer 320 and forms protection. In the meantime, the next printing layer may also be bonded to the color layer 320 with the adhesive layer 430, thereby increasing the bonding strength and the protection effect. In the present embodiment, an orthographic projection area of each of the adhesive layer 430 and the adhesive layer 330 on each of the printing layers 310 is equal to an orthographic projection area of the color layer 320 on each of the printing layers 310.

FIG. 11 is a schematic cross-sectional diagram illustrating a part of the printing layers according to another embodiment. Referring to FIG. 11, the present embodiment is similar to the embodiment illustrated in FIG. 10 (which is equivalent to the combination of the embodiments illustrated in FIG. 7 and FIG. 9, where an adhesive layer 530 is disposed between any adjacent printing layer 310 and color layer 330. In the present embodiment, an orthographic projection area of the adhesive layer 530 on each of the printing layers 310 is greater than an orthographic projection area of the color layer 320 on each of the printing layers 310. Namely, the color layer 320 is entirely covered within the adhesive layer 530. In addition, in the embodiments illustrated in FIG. 10 and FIG. 11, the adhesive layer 330, 430 or 530 may fill the gap S between each two adjacent printing layers 310, thereby achieving the protection of the color layer 320 or preventing the color layer ink from affecting other printing layers in the same way as the embodiments described above.

It should be mentioned that in another embodiment which is not shown, the steps illustrated in FIG. 3 and FIG. 8 may also be performed by any electronic apparatus beside the three-dimensional printing device 100, and after the related analysis operation is completed to generate corresponding instructions, the instructions are imported to the three-dimensional printing device 100 for the actual printing operation.

In view of the foregoing, in the embodiments of the disclosure, the printing layer and the color layer are attached to each other with the disposition of the adhesive layer, or by disposing the adhesive layer on the colored printing layer, and thereby, in both ways, the bonding strength and the structure enhancement can be improved. In the meantime, the adhesive layer covering the color layer has the protection effect and can prevent issues, such as color fading and ink slipping away due to affection by ambient vapor and light irradiation or physical wear and tear. In addition, in some of the embodiments, as the fluidity of the adhesive layer is better than that of the color layer (ink), the adhesive layer can not only fix the color layer, but also fill the gap between the printing layers. In this way, besides increasing evenness of the color layer and preventing other printing layers from being affected, the adhesive layer, due to being made of a transparent material, can further improve translucency and aesthetics of the three-dimensional object.

## Claims

1. A three-dimensional printing method, adapted for a three-dimensional printing device (100) to print a three-dimensional object, the three-dimensional printing method comprising:
providing structure information and coloring information of the three-dimensional object;
performing a slicing process on the structure information of the three-dimensional object by a processor to obtain information of a plurality of printing layers (210);
controlling the coloring information of the three-dimensional object to correspond to the information of the printing layers (210) by the processor to obtain information of a color layer (210) corresponding to each of the printing layers (210); and
disposing an adhesive layer (230) on each of the printing layers (210) and its corresponding color layer(220), such that the adhesive layer (230) covers at least a part of the color layer(220).

2. The three-dimensional printing method according to claim 1, wherein an orthographic projection area of the adhesive layer (230) on the printing layer (210) is greater than or equal to an orthographic projection area of the color layer (220) on the printing layer(210).

3. The three-dimensional printing method according to claim 1, wherein a gap (S) exists between any two adjacent printing layers (210), and the adhesive layer (230) fills the gap(S).

4. The three-dimensional printing method according to claim 3, wherein the plurality of printing layers (210) comprise a first printing layer and a second printing layer, the adhesive layer (230) is disposed between the first printing layer and the second printing layer, the color layer (220) is disposed between the first printing layer and the adhesive layer, the gap (S) exists between the first printing layer and the second printing layer, and the three-dimensional printing method further comprises:
when the second printing layer is disposed on the adhesive layer(230), simultaneously extruding the adhesive layer (230) to fill the gap(S).

5. The three-dimensional printing method according to claim 4, wherein the second printing layer activates adhesion of the adhesive layer(230).

6. The three-dimensional printing method according to claim 1, further comprising:
disposing another adhesive layer (330) between each of the printing layers (310) and its corresponding color layer(320), such that the color layer (320) is attached to the printing layer (310) with the another adhesive layer(330).

7. A three-dimensional printing method, adapted for a three-dimensional printing device (100) to print a three-dimensional object, the three-dimensional printing method comprising:
providing structure information and coloring information of the three-dimensional object; and
performing a slicing process on the structure information of the three-dimensional object by processor to obtain information of a plurality of printing layers(310);
controlling the coloring information of the three-dimensional object to correspond to the information of the printing layers (310) by the processor to determine whether a predetermined color-layer region (312) exists on each of the printing layers (310);
when the predetermined color-layer region (312) exists on the printing layer(310), disposing an adhesive layer (330) in the predetermined color-layer region(312); and
disposing the color layer (320) in the predetermined color-layer region(312), such that the color layer (320) is attached to the printing layer (310) with the adhesive layer(330).

8. The three-dimensional printing method according to claim 7, further comprising:
disposing another adhesive layer (430) on the color layer(320), such that the another adhesive layer (320) covers the color layer(320).

9. The three-dimensional printing method according to claim 8, wherein an orthographic projection area of the another adhesive layer (320) on the printing layer (310) is greater than or equal to an orthographic projection area of the color layer (320) on the printing layer(310).

10. The three-dimensional printing method according to claim 8, wherein the plurality of printing layers (310) comprise a first printing layer and a second printing layer, the color layer (320) is attached to the first printing layer with the adhesive layer(330), and the three-dimensional printing method further comprises:
disposing the second printing layer to be attached to the color layer (320) with the another adhesive layer(430).

11. The three-dimensional printing method according to claim 10, wherein a gap (S) exists between the first printing layer and the second printing layer, and the three-dimensional printing method further comprises:
disposing the second printing layer on the another adhesive layer(430), and simultaneously extruding the another adhesive layer (430) to fill the gap(S).

12. The three-dimensional printing method according to claim 10, wherein the second printing layer activates adhesion of the adhesive layer(430).

13. The three-dimensional printing method according to claim 1 or claim 7, wherein a fluidity of the adhesive layer (330) is greater than a fluidity of the color layer (320), and a surface tension of the adhesive layer (330) is less than a surface tension of the color layer(320).

14. The three-dimensional printing method according to claim 7, wherein an adhesion force of the color layer (320) with respect to the printing layer (310) is less than an adhesion force of the adhesive layer (330) with respect to the printing layer(310).

15. The three-dimensional printing method according to claim 1 or claim 7, wherein the adhesive layer (230) is transparent.

16. The three-dimensional printing method according to claim 1 or claim 7, wherein the printing layer (210) is hydrophobic.

## Patentansprüche

1. Dreidimensionales Druckverfahren, das für eine dreidimensionale Druckvorrichtung (100) zum Drucken eines dreidimensionalen Objekts angepasst ist, wobei das dreidimensionale Druckverfahren umfasst:
Bereitstellen von Strukturinformationen und Farbinformationen des dreidimensionalen Objekts;
Durchführen eines Slicing-Prozesses an den Strukturinformationen des dreidimensionalen Objekts durch einen Prozessor, um Informationen über eine Vielzahl von Druckschichten (210) zu erhalten;
Steuern der Farbinformationen des dreidimensionalen Objekts, um den Informationen der Druckschichten (210) durch den Prozessor zu entsprechen, um Informationen über eine Farbschicht (210) zu erhalten, die jeder der Druckschichten (210) entspricht; und
Anordnen einer Klebeschicht (230) auf jeder der Druckschichten (210) und ihrer entsprechenden Farbschicht (220), so dass die Klebeschicht (230) mindestens einen Teil der Farbschicht (220) bedeckt.

2. Dreidimensionales Druckverfahren nach Anspruch 1, wobei eine orthographische Projektionsfläche der Klebeschicht (230) auf der Druckschicht (210) größer oder gleich einer orthographischen Projektionsfläche der Farbschicht (220) auf der Druckschicht (210) ist.

3. Dreidimensionales Druckverfahren nach Anspruch 1, wobei zwischen zwei benachbarten Druckschichten (210) ein Spalt (S) vorhanden ist und die Klebeschicht (230) den Spalt (S) füllt.

4. Dreidimensionales Druckverfahren nach Anspruch 3, wobei die Vielzahl von Druckschichten (210) eine erste Druckschicht und eine zweite Druckschicht umfasst, die Klebeschicht (230) zwischen der ersten Druckschicht und der zweiten Druckschicht angeordnet ist, die Farbschicht (220) zwischen der ersten Druckschicht und der Klebeschicht angeordnet ist, der Spalt (S) zwischen der ersten Druckschicht und der zweiten Druckschicht besteht und das dreidimensionale Druckverfahren ferner umfasst:
wenn die zweite Druckschicht auf der Klebeschicht (230) angeordnet ist, gleichzeitig Extrudieren der Klebeschicht (230), um den Spalt (S) zu füllen.

5. Dreidimensionales Druckverfahren nach Anspruch 4, wobei die zweite Druckschicht die Haftung der Klebeschicht (230) aktiviert.

6. Dreidimensionales Druckverfahren nach Anspruch 1, ferner umfassend:
Anordnen einer weiteren Klebeschicht (330) zwischen jeder der Druckschichten (310) und ihrer entsprechenden Farbschicht (320), so dass die Farbschicht (320) mit der anderen Klebeschicht (330) an der Druckschicht (310) befestigt ist.

7. Dreidimensionales Druckverfahren, das für eine dreidimensionale Druckvorrichtung (100) zum Drucken eines dreidimensionalen Objekts angepasst ist, wobei das dreidimensionale Druckverfahren umfasst:
Bereitstellen von Strukturinformationen und Farbinformationen des dreidimensionalen Objekts; und
Durchführen eines Slicing-Prozesses an den Strukturinformationen des dreidimensionalen Objekts durch einen Prozessor, um Informationen über eine Vielzahl von Druckschichten (310) zu erhalten;
Steuern der Farbinformationen des dreidimensionalen Objekts, um den Informationen der Druckschichten (310) zu entsprechen, durch den Prozessor, um zu bestimmen, ob ein vorgegebener Farbschichtbereich (312) auf jeder der Druckschichten (310) vorhanden ist;
wenn der vorbestimmte Farbschichtbereich (312) auf der Druckschicht (310) vorhanden ist, Anordnen einer Klebeschicht (330) in dem vorbestimmten Farbschichtbereich (312); und
Anordnen der Farbschicht (320) im vorbestimmten Farbschichtbereich (312), so dass die Farbschicht (320) mit der Klebeschicht (330) an der Druckschicht (310) befestigt ist.

8. Dreidimensionales Druckverfahren nach Anspruch 7, ferner umfassend:
Anordnen einer weiteren Klebeschicht (430) auf der Farbschicht (320), so dass die andere Klebeschicht (320) die Farbschicht (320) bedeckt.

9. Dreidimensionales Druckverfahren nach Anspruch 8, wobei eine orthographische Projektionsfläche der anderen Klebeschicht (320) auf der Druckschicht (310) größer oder gleich einer orthographischen Projektionsfläche der Farbschicht (320) auf der Druckschicht (310) ist.

10. Dreidimensionales Druckverfahren nach Anspruch 8, wobei die Vielzahl von Druckschichten (310) eine erste Druckschicht und eine zweite Druckschicht umfasst, die Farbschicht (320) mit der Klebeschicht (330) an der ersten Druckschicht befestigt ist und das dreidimensionale Druckverfahren ferner umfasst:
Anordnen der zweiten Druckschicht, die mit der anderen Klebeschicht (430) an der Farbschicht (320) anzubringen ist.

11. Dreidimensionales Druckverfahren nach Anspruch 10, wobei ein Spalt (S) zwischen der ersten Druckschicht und der zweiten Druckschicht besteht, und das dreidimensionale Druckverfahren ferner umfasst:
Anordnen der zweiten Druckschicht auf der anderen Klebeschicht (430) und gleichzeitiges Extrudieren der anderen Klebeschicht (430), um den Spalt (S) zu füllen.

12. Dreidimensionales Druckverfahren nach Anspruch 10, wobei die zweite Druckschicht die Haftung der Klebeschicht (430) aktiviert.

13. Dreidimensionales Druckverfahren nach Anspruch 1 oder Anspruch 7, wobei eine Fluidität der Klebeschicht (330) größer ist als eine Fluidität der Farbschicht (320), und eine Oberflächenspannung der Klebeschicht (330) kleiner ist als eine Oberflächenspannung der Farbschicht (320).

14. Dreidimensionales Druckverfahren nach Anspruch 7, wobei eine Haftkraft der Farbschicht (320) in Bezug auf die Druckschicht (310) kleiner ist als eine Haftkraft der Klebeschicht (330) in Bezug auf die Druckschicht (310).

15. Dreidimensionales Druckverfahren nach Anspruch 1 oder Anspruch 7, wobei die Klebeschicht (230) transparent ist.

16. Dreidimensionales Druckverfahren nach Anspruch 1 oder Anspruch 7, wobei die Druckschicht (210) hydrophob ist.

## Revendications

1. Procédé d'impression tridimensionnelle, adapté pour un dispositif d'impression tridimensionnelle (100) pour imprimer un objet tridimensionnel, le procédé d'impression tridimensionnelle comprenant :
fournir des informations de structure et des informations de coloration de l'objet tridimensionnel ;
réaliser un processus de tranchage sur les informations de structure de l'objet tridimensionnel par un processeur pour obtenir des informations d'une pluralité de couches d'impression (210) ;
contrôler les informations de coloration de l'objet tridimensionnel pour correspondre aux informations des couches d'impression (210) par le processeur pour obtenir des informations d'une couche de couleur (210) correspondant à chacune des couches d'impression (210) ; et
disposer une couche adhésive (230) sur chacune des couches d'impression (210) et sa couche de couleur correspondante (220), de telle sorte que la couche adhésive (230) recouvre au moins une partie de la couche de couleur (220) .

2. Procédé d'impression tridimensionnelle selon la revendication 1, dans lequel une aire de projection orthographique de la couche adhésive (230) sur la couche d'impression (210) est supérieure ou égale à une aire de projection orthographique de la couche de couleur (220) sur la couche d'impression (210).

3. Procédé d'impression tridimensionnelle selon la revendication 1, dans lequel un intervalle (S) existe entre toute paire de couches d'impression adjacentes (210), et la couche adhésive (230) remplit l'intervalle (S).

4. Procédé d'impression tridimensionnelle selon la revendication 3, dans lequel la pluralité de couches d'impression (210) comprennent une première couche d'impression et une deuxième couche d'impression, la couche adhésive (230) est disposée entre la première couche d'impression et la deuxième couche d'impression, la couche de couleur (220) est disposée entre la première couche d'impression et la couche adhésive, l'espace (S) existe entre la première couche d'impression et la deuxième couche d'impression, et le procédé d'impression tridimensionnelle comprend en outre :
lorsque la deuxième couche d'impression est disposée sur la couche adhésive (230), extruder simultanément la couche adhésive (230) pour remplir l'intervalle (S).

5. Procédé d'impression tridimensionnelle selon la revendication 4, dans lequel la deuxième couche d'impression active l'adhésion de la couche adhésive (230).

6. Procédé d'impression tridimensionnelle selon la revendication 1, comprenant en outre :
disposer une autre couche adhésive (330) entre chacune des couches d'impression (310) et sa couche de couleur correspondante (320), de telle sorte que la couche de couleur (320) est fixée à la couche d'impression (310) avec l'autre couche adhésive (330).

7. Procédé d'impression tridimensionnelle, adapté pour un dispositif d'impression tridimensionnelle (100) pour imprimer un objet tridimensionnel, le procédé d'impression tridimensionnelle comprenant :
fournir des informations de structure et des informations de coloration de l'objet tridimensionnel ;
réaliser un processus de tranchage sur les informations de structure de l'objet tridimensionnel par un processeur pour obtenir des informations d'une pluralité de couches d'impression (310) ;
contrôler les informations de coloration de l'objet tridimensionnel pour correspondre aux informations des couches d'impression (310) par le processeur pour déterminer si une région de couche de couleur prédéterminée (312) existe sur chacune des couches d'impression (310) ;
lorsque la région de couche de couleur prédéterminée (312) existe sur la couche d'impression (310), disposer une couche adhésive (330) dans la région de couche de couleur prédéterminée (312) ; et
disposer la couche de couleur (320) dans la région de couche de couleur prédéterminée (312), de telle sorte que la couche de couleur (320) est fixée à la couche d'impression (310) avec la couche adhésive (330).

8. Procédé d'impression tridimensionnelle selon la revendication 1, comprenant en outre :
disposer une autre couche adhésive (430) sur la couche de couleur (320), de telle sorte que l'autre couche adhésive (320) recouvre la couche de couleur (320).

9. Procédé d'impression tridimensionnelle selon la revendication 8, dans lequel une aire de projection orthographique de l'autre couche adhésive (320) sur la couche d'impression (310) est supérieure ou égale à une aire de projection orthographique de la couche de couleur (320) sur la couche d'impression (310).

10. Procédé d'impression tridimensionnelle selon la revendication 8, dans lequel la pluralité de couches d'impression (310) comprennent une première couche d'impression et une deuxième couche d'impression, la couche de couleur (320) est fixée à la première couche d'impression avec la couche adhésive (330), et le procédé d'impression tridimensionnelle comprend en outre :
disposer la deuxième couche d'impression pour qu'elle soit fixée à la couche de couleur (320) avec l'autre couche adhésive (430).

11. Procédé d'impression tridimensionnelle selon la revendication 10, dans lequel un intervalle (S) existe entre la première couche d'impression et la deuxième couche d'impression, et le procédé d'impression tridimensionnelle comprend en outre :
disposer la deuxième couche d'impression sur l'autre couche adhésive (430), et extruder simultanément l'autre couche adhésive (430) pour remplir l'intervalle (S) .

12. Procédé d'impression tridimensionnelle selon la revendication 10, dans lequel la deuxième couche d'impression active l'adhésion de la couche adhésive (430).

13. Procédé d'impression tridimensionnelle selon la revendication 1 ou la revendication 7, dans lequel une fluidité de la couche adhésive (330) est supérieure à une fluidité de la couche de couleur (320), et une tension superficielle de la couche adhésive (330) est inférieure à une tension superficielle de la couche de couleur (320).

14. Procédé d'impression tridimensionnelle selon la revendication 7, dans lequel une force d'adhérence de la couche de couleur (320) par rapport à la couche d'impression (310) est inférieure à une force d'adhérence de la couche adhésive (330) par rapport à la couche d'impression (310).

15. Procédé d'impression tridimensionnelle selon la revendication 1 ou la revendication 7, dans lequel la couche adhésive (230) est transparente.

16. Procédé d'impression tridimensionnelle selon la revendication 1 ou la revendication 7, dans lequel la couche d'impression (210) est hydrophobe.
